Europäisches Patentamt

European Patent Office

Office européen des brevets

(11) Publication number: **0 080 267 B1**

(12) **EUROPEAN PATENT SPECIFICATION**

(45) Date of publication of patent specification: **10.12.86**

(51) Int. Cl.⁴: **F 16 F 9/08, B 60 G 15/12, F 16 L 37/08**

(21) Application number: **82305667.6**

(22) Date of filing: **26.10.82**

(54) **Air spring shock absorber suspension strut for a vehicle.**

(30) Priority: **24.11.81 US 324490**

(43) Date of publication of application:
**01.06.83 Bulletin 83/22**

(45) Publication of the grant of the patent:
**10.12.86 Bulletin 86/50**

(84) Designated Contracting States:
**DE FR GB IT**

(56) References cited:
**DE-A-2 102 268**
**GB-A-1 012 982**
**GB-A-2 065 826**
**US-A-3 063 701**
**US-A-3 178 167**
**US-A-3 700 225**
**US-A-3 784 235**
**US-A-3 918 693**
**US-A-4 022 448**
**US-A-4 106 175**

(73) Proprietor: **GENERAL MOTORS CORPORATION**
**General Motors Building 3044 West Grand Boulevard**
**Detroit Michigan 48202 (US)**

(72) Inventor: **Fannin, Wayne Vincent**
**2098 Upper Bellbrook Road**
**Xenia Ohio 45385 (US)**
Inventor: **Pees, James Mitchell**
**634 Britton Drive**
**Dayton Ohio 45429 (US)**

(74) Representative: **Breakwell, John Neil Bower et al**
**GM Patent Section Luton Office (F6) P.O. Box No. 3 Kimpton Road**
**Luton Beds. LU2 0SY (GB)**

Courier Press, Leamington Spa, England.

# Description

This invention relates to an air spring shock absorber suspension strut according to the prior art part of claim 1.

A known air spring shock absorber suspension strut is disclosed in GB—A—2065826. This known strut comprises a vertical cylinder with a piston rod extending out of the cylinder. The strut also includes an air spring unit including: a cylindrical housing rotatably mounted on, but permanently secured to, the cylinder; a support member secured to the piston rod; and a flexible tubular diaphragm (air spring sleeve) permanently secured at one end to the cylindrical housing and permanently secured at the other end to the inner wall of the support member.

A generally similar arrangement is disclosed in DE—A—2102268.

Prior air spring strut and load levelling shock absorber units of this type have provided highly desirable vehicle suspension and levelling characteristics with good service life. Such constructions, although providing exceptional ride and levelling control, often require exchange of the air spring sleeve after extended service use or after accidental damage. Prior to the present invention, rebuild of the air spring for levelling-type shock absorber and suspension strut units has tended to be relatively difficult and time-consuming due to the way in which the air spring sleeve has been secured to the parts of the strut. Such rebuild may well involve return of the strut to the manufacturers.

The present invention is concerned with a strut construction which facilitates exchange of the air spring.

To this end, an air spring shock absorber suspension strut in accordance with the present invention is characterised by the features specified in the characterising portion of claim 1.

Thereby, an advanced and improved connection and sealing of the air sleeve in such units is possible with a simple slip fit of the upper fitting to the elongate cylindrical support casing (which may constitute a reservoir tube). This upper fitting, to which the upper end portion of the air sleeve is previously clamped, to provide a sub-assembly, has the potential to establish a positive and highly effective air seal to enhance the exchange of used sleeves. After installation of the upper fitting and the replacement air sleeve, the lower end of the air sleeve can be readily attached to the dust tube or like construction by means of a simple and conventional hose clamp.

With this invention, therefore, the upper and lower sealing of the replacement air spring is simplified, and improved to an extent permitting repair to be readily accomplished at a garage, etc. by a wide range of users, including those with only average mechanical skills.

The invention also extends to a method of servicing such a strut which is specified in claim 9, and a kit of parts as specified in claim 10.

In the drawings:

Figure 1 is a longitudinal section, with parts broken away and in elevation, of a preferred embodiment of an air spring shock absorber suspension strut in accordance with the present invention;

Figure 2 is an enlarged view of a portion of the suspension strut shown in Figure 1; and

Figure 3 is a cross-sectional view of a factory-build air spring shock absorber suspension strut prior to being serviced with a new elastomeric air spring sleeve in conformity with the present invention.

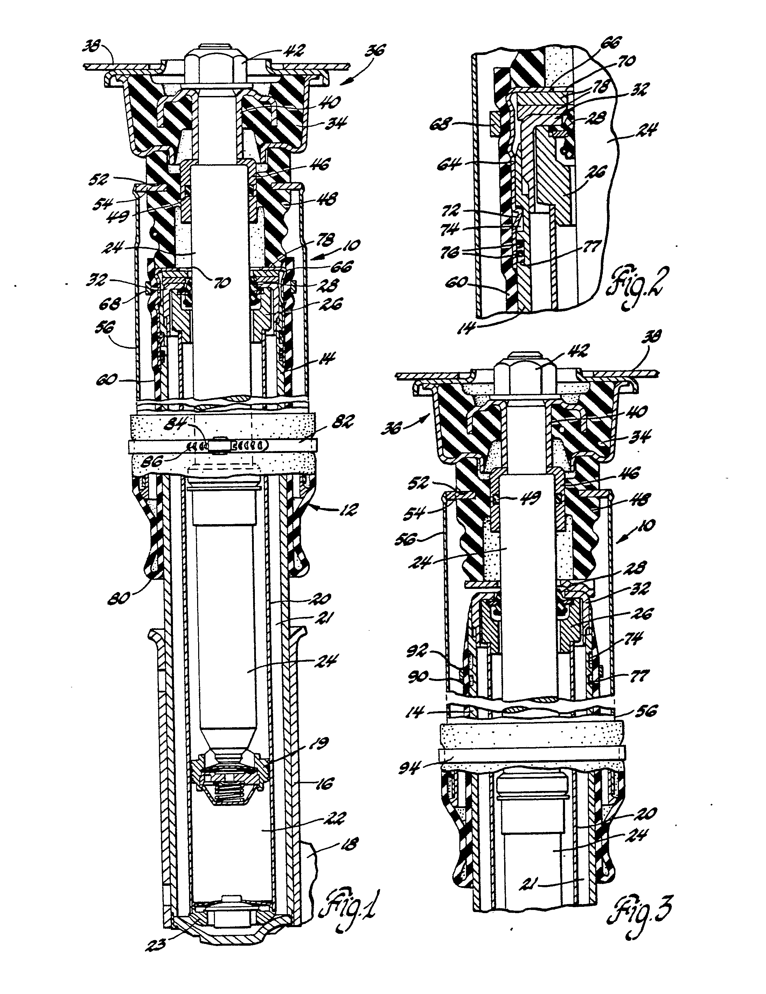

In the drawing, Figures 1 and 2 show an air spring shock absorber suspension strut 10 with a rebuilt air spring 12, operatively disposed between sprung and unsprung portions of a vehicle. The strut 10 has an elongate cylindrical support casing 14 constituting a reservoir tube that is mounted in a cup-like retainer 16 connected to an axle, wheel assembly or other part of an unsprung portion 18 of the vehicle. The suspension strut 10 incorporates a valved piston 19 mounted for sliding reciprocal movement in an oil-filled cylinder tube 20. The space between the cylinder tube 20 and the support casing 14 forms a reservoir 21 for hydraulic working fluid (oil) for the strut, and is connected to a compression chamber 22 in the cylinder tube by a base valve 23. A cylindrical piston rod 24 is attached by welding to the piston 19 and extends in an upward direction slidably through a generally cylindrical piston rod guide 26 press-fitted in the upper end portion of the cylinder tube 20. An annular elastomeric seal 28, seated in a counterbore recess in the upper end portion of the rod guide 26, surrounds and sealingly engages the piston rod 24. The seal 28 is held in the recess in the rod guide 26 by a cylindrical end cap 32 press-fitted into the upper end of the support casing 14. The rod guide 26 and seal construction blocks the passage of oil from the interior of the cylinder and reservoir tubes and prevents entry of foreign matter from the exterior into these tubes.

The piston rod 24 extends through the end cap 32 to the exterior, and is connected at its upper end portion to an elastomeric isolator 34 of an upper mount assembly 36 that is in turn secured to the sprung portion 38 of the vehicle. In this preferred embodiment, the piston rod 24 projects through a tubular connector 40 that is embedded in the elastomeric isolator 34, and a nut 42 is threaded on to the end of the piston rod to trap the isolator thereon, as shown in FIG. 1. A sleeve-like carrier member 46 is securely mounted on the piston rod 24 near the upper end thereof for supporting a generally cylindrical elastomeric cushion spring 48. An annular O-ring 49 is disposed between the piston rod and the inner wall of the carrier member 46 to provide sealing in this area. The cushion spring 48 is disposed immediately below the upper mount assembly 36, and, being made of a resilient elastomer material, deflects when the strut components telescope together, to cushion compression loads experienced by the strut.

The cushion spring 48 is grooved at 52 to provide an annular recess to receive a disc-like end plate 54 of an outer tubular member constituting a dust tube 56. The dust tube 56 has a cylindrical wall which extends downwardly from its connection region with the end plate 54 to surround a portion of the support casing 14 as well as the cushion spring 48 and other components of the strut.

The air spring 12 of the strut comprises a tubular sleeve 60 of resilient elastomeric material having its upper end secured in fluid-tight fashion by an annular hose clamp 68 to the cylindrical wall 64 of an upper fitting 66. The upper fitting 66 is formed as a metallic cup-like member which has a central opening 70 in its upper end wall to permit passage of the piston rod 24.

The cylindrical wall 64 of the upper fitting 66 closely fits over the wall of the support casing 14, and is formed with inwardly extending tang-like depressions, dimples or an annulus, to provide a spring retainer 72 for the upper fitting. This spring retainer 72 is received in push-on fashion in an annular retainer groove 74 formed in the support casing 14, and thereupon retained by a radially extending wall of the groove, such that the upper fitting 66 is secured to the support casing 14. Disposed below the mechanical attachment provided by the spring retainer 72 and retainer groove 74 are a pair of O-rings 76 disposed in an annular groove 77 formed in the support casing: these O-rings 76 sealingly engage the inner wall of the upper fitting 66, and so contribute to pneumatic sealing of the upper end portion of the sleeve 60. Washer-like spacers 78 are installed on the end cap 32 prior to installation of the fitting 66.

The hose clamp 68 is factory-constricted, for example by magneforming (magnetic deformation), to sealingly connect the upper end portion of the sleeve 60 to the upper end region of the upper fitting 66. The sleeve 60 and upper fitting 66, and the O-ring seals 76, may be supplied as a repair or replacement kit for the original-equipment strut shown in FIG. 3.

From the magneformed hose clamp 68, the sleeve 60 extends downwardly around the support casing 14 and is reversely curved to form an annular rolling lobe 80. From the lobe 80 the sleeve extends upwardly around the lower end portion of the dust tube 56, to which it is secured by a clamping band 82. This clamping band 82 has a worm screw 84 that is fixed to one end of the band and engages a series of slots 86 formed in the other end portion of the band, the band being tightened or loosened as desired by appropriate turning of the worm screw 84, for example by a screwdriver or other tool. With the band 82 sufficiently tightened around the lower end of the sleeve 60, a pneumatic seal is accomplished to complete the air spring 12. Suitable fittings (not illustrated) can be provided in the wall of the dust tube for connection to a level control system such as that shown in US—A—4,168,840 (Graham), issued September 25, 1979.

FIG 3 shows the strut as originally manufactured with an upper end portion of an elastomeric tubular sleeve 90 fastened directly to the support casing 14 by a hose clamp 92 magneformed or otherwise constricted to provide a pneumatic seal between the sleeve and the reservoir tube. Annular grooves 74 and 77 formed in the support casing 14 accommodate the spring retainer tangs 72 and the O-ring seals of the rebuild kit as explained in connection with FIGS 1 and 2. The lower end portion of the sleeve 90 is secured to a lower end portion of the cylindrical wall 56 of the dust tube and by a hose clamp 94 magneformed or otherwise shrunk to provide the pneumatic seal required to establish the original air supsension spring.

If the original air spring of FIG 3 should require replacement, the hose clamp 94 can be severed and removed. After uncoupling of the upper mount assembly 36 from the sprung portion 38 of the vehicle, the nut 42, the upper mount assembly cushion spring 48, the dust tube 56 and the worn sleeve 90 and upper clamp 92 are removed from the strut. After such removal, the washer-like spacers 78 are stacked on the end cap 32 and the O-ring seals are installed in the groove 77. The new air spring tubular sleeve 60 is then axially advanced over the support casing 14 until the upper fitting 66 slips into its fitted position on the support casing, with the retainer tangs 72 snapping in to the annular retainer groove 74. The hose clamp 68, previously factory installed, cooperates with the seal provided by the O-rings 76 to complete the sealing of the upper end of the air spring. The free end of the sleeve 60 is then reversely curved and the lower end thereof is stretched around the lower end of the dust tube, re-assembled with the cushion spring 48, to receive the clamping band 82 which can be readily installed by the oridinary mechanic. With the new air sleeve and the upper mount assembly and nut in position, the rebuilt air strut vehicle can be reinstalled on the vehicle and re-attached to the levelling system for levelling or spring suspension operation.

In this way there is provided a new and improved serviceable vehicle suspension unit in which a replacement elastomeric air sleeve is connected at one end to a special fitting which slip-fits with pneumatic sealing on to one end of a tubular component of the supsension unit, so permitting the ready attachment of the other end of the air sleeve to the unit by the application of a simple hose clamp construction to establish an air suspension spring.

**Claims**

1. An air spring shock absorber suspension strut (10) for connection between sprung (38) and unsprung (18) portions of a vehicle, in which a telescopic shock absorber adapted to be mounted in an upright position in the vehicle comprises an elongate cylindrical support casing (14) having a lower end portion connectible to the unsprung portion (18) of the vehicle, and a motion-damping piston (19) mounted for reciprocatory movement within the support casing (14), with a piston rod (24) therefor extending from the support casing (14) and having an upper end portion connectible to the sprung portion (38) of the vehicle, an outer tubular member (56) which is mounted at an upper portion thereof on the piston rod (24) and surrounds a portion of the cylindrical support casing (14), and a tubular sleeve (60) of elastomeric material having a lower end portion circumferentially clamped to and sealingly connected to the outer tubular member (56) and an upper end portion circumferentially clamped to and sealingly connected to a cylindrical wall (64) of an upper fitting (66) which closely fits over and surrounds an upper portion of the cylindrical support casing (14), with the tubular sleeve (60) forming a rolling lobe (80), characterised in that a locking device (72) is carried on the cylindrical wall (64) of the upper fitting (66) which interlocks with a mating configuration on the upper portion of the support casing (14) to secure the upper fitting (66) to the support casing (14) such that the upper fitting (66) can move with the support casing (14); sealing means (76) are provided between the cylindrical wall (64) of the upper fitting (66) and the upper cylindrical wall portion of the support casing (14); the rolling lobe (80) of the tubular sleeve (60) engages and rolls directly along the outer surface of the cylindrical support casing (14) during suspension strut operation; and the lower end portion of the tubular sleeve (60) is circumferentially clamped to the exterior surface of the outer tubular member (56) by releasably adjustable clamping means (82); the arrangement being such that the upper end portion of the tubular sleeve (60) is circumferentially clamped to the upper fitting (66) before the upper fitting (66) is positioned on the upper portion of the cylindrical support casing (14).

2. An air spring shock absorber suspension strut according to claim 1, characterised in that the elongate cylindrical support casing (14) constitutes a reservoir tube of the telescopic shock absorber within which is mounted an elongate cylinder tube (20) which forms an annular reservoir chamber (21) for a hydraulic fluid in and from the cylinder tube (20); the piston (19) is slidably mounted in the cylinder tube (20); a piston rod guide (26) slidably receives the piston rod (24) and is mounted in the cylinder tube (20) and closes the upper end thereof; and the outer tubular member comprises a dust tube (56) that is sealingly connected to the upper end portion of the piston rod (24) for movement with the piston rod (24), with the tubular sleeve (60) constituting an air suspension spring.

3. An air spring shock absorber suspension strut according to claim 1 or. 2, characterised in that the locking device carried by the cylindrical wall (64) of the upper fitting (66) is a spring detent (72) adapted to releasably interlock in a recess (74) in the elongate cylindrical support casing (14), to provide a pneumatically sealed mounting for the upper end of the tubular sleeve (60) to the elongate cylindrical support casing (14).

4. An air spring shock absorber suspension strut according to claim 3, characterised in that the spring detent comprises a push-on mechanical interlock (72, 74) with the elongate cylindrical support casing (14), constituted by inwardly extending tang-like depressions (72), dimples or an annulus on the upper fitting (66), for co-operation with an annular retainer groove (74) formed in the cylindrical support casing (14).

5. An air spring shock absorber suspension strut according to any of claims 1 to 4, characterised in that the upper fitting (66) is made of sheet metal and has a cup-shaped configuration.

6. An air spring shock absorber suspension strut according to any one of claims 1 to 5, characterised in that the upper portion of the tubular sleeve (60) is circumferentially clamped to the cylindrical wall (64) of the upper fitting (66) by means of an annular clamp band (68) encircling the upper portion.

7. An air spring shock absorber suspension strut according to any one of claims 1 to 6, characterized in that the releasably adjustable clamping means comprises a releasably adjustable annular clamp band (82).

8. An air spring shock absorber suspension strut according to claim 7, characterised in that the annular clamp band (82) comprises a worm screw (84) fixed to one end of the band which engages a series of slots (86) formed in the other end portion of the band.

9. A method of servicing an air spring shock absorber suspension strut (10) having a hydraulic shock absorber operatively mounted within an outer support casing (14) and having a worn cylindrical air sleeve (90) of rubber-like material with one end connected by first encircling clamp means (92) to the support tube and the other end connected by second encircling clamp means (94) to a dust tube (56) of the strut, the dust tube being removably connected to an upper end of a reciprocably movable piston rod (24) of the shock absorber and co-operating with the air sleeve to form a chamber to receive pressurized air and provide a pneumatic spring (12) between sprung (38) and unsprung (18) vehicle components, comprising the steps of:

a) removing the worn tubular air sleeve (60, 90) of the strut (10) from the outer tubular member (56) of the strut;

b) removing the outer tubular member (56) from the strut;

c) removing the worn tubular air sleeve (60, 90) from the cylindrical support casing (14) of the strut;

d) re-installing the outer tubular member (56) to the strut (10);

e) stretching the lower end of the replacement tubular air sleeve (60) around the lower end of the outer tubular member (56) and circumferentially clamping the lower end of the sleeve (60) to the outer tubular member (56) by releasably adjustable clamping means (82) in an air-tight manner; and

f) charging the interior of the replacement tubular air sleeve (60) with pressurized air, characterized by sliding a cylindrical upper fitting (66) of a sub-assembly comprising a replacement tubular air sleeve (60) circumferentially clamped to and sealing connected to a cylindrical wall (64) of the upper fitting (66) over the cylindrical support casing (14) until the fitting (66) fits on to and releasably locks in an air-tight manner on the upper portion of the support casing (14).

10. A kit of parts for an air spring shock absorber suspension strut according to any one of claims 1 to 8 comprising a sub-assembly of an upper fitting (66); a tubular sleeve (60) of elastomeric material having an end portion circumferentially clamped to and sealing connected to a cylindrical wall (64) of the upper fiting (66); and releasably adjustable clamping means (82).

**Patentansprüche**

1. Aus Luftfeder und Stoßdämpfer gebildetes Federbein (10) zur Verbindung zwischen gefederten (38) une ungefederten (18) Abschnitten eines Fahrzeuges, bei welchem ein zum Anbringen in einer aufrechten Lage in dem Fahrezeug ausgelegter Teleskop-Stoßdämpfer ein längliches zylindrisches Stützgehäuse (14) umfaßt mit einem unteren Endabschnitt, der mit dem ungefederten Abschnitt (18) des Fahrzeug verbindbar ist, und einen bewegungsdämpfenden Kolben (19), der in dem Stützgehäuse (14) hin- und herbewegbar angebracht ist, wobei eine Kolbenstange (24) für diesen aus dem Stützgehäuse (14) hervorsteht und einen mit dem gefederten Abschnitt (38) des Fahrzeugs verbindbaren oberen Endabschnitt besitzt, ein äußeres rohrförmiges Teil (56), das an einem oberen Abschnitt desselben an der Kolbenstange (24) befestigt ist und einen Abschnitt des zylindrischen Stützgehäuses (14) umgibt, une eine rohrförmige Hülse (60) aus elastomerem Material mit einem unteren Abschnitt, dessen Umfang an das äußere Rohrteil (56) angeklemmt und dicht mit ihm verfunden ist und einem oberen Endabschnitt, dessen Umfang an eine zylindrische Wand (64) angeklemmt und dicht mit ihr verfunden ist, eines oberen Paßstückes (66), das eng über einen oberen Abschnitt des zylindrischen Stützgehäuses (14) paßt und dieses umgibt, wobei die rohrförmige Hülse (60) einen Rollumschlag (80) bildet, dadurch gekennzeichnet, daß eine Einrast-Einrichtung (72) an der zylindrischen Wand (64) des oberen Paßstückes (66) gehalten ist, die mit einer passenden Ausgestaltung an dem oberen Abschnitt des Stützgehäuses (14) Formschluß bildet, um das obere Paßstück (66) an dem Stützgehäuse (14) so zu sichern, daß das obere Paßstück (66) sich mit dem Stützghäuse (14) bewegen kann; daß Dichtmittel (76) zwischen der zylindrischen Wand (64) des oberen Paßstückes (66) und dem oberen zylindrischen Wandabschnitt des Stützgehäuses (14) vorgesehen sind; daß der Rollumschlag (80) der rohrförmigen Hülse (60) während Federbeinbetätigung direkt längs der Außenfläche des zylindrischen Stützgehäuses (14) anliegt und abrollt; und daß der untere Endabschnitt der rohrförmigen Hülse (60) mit seinem Umfang an die Außenfläche des äußeren Rohrteiles (56) durch lösbar einstellbare Klemmittel (82) angeklemmt ist; wobei die Anordnung so ist, daß der obere Endabschnitt der rohrförmigen Hülse (60) am Umfang an dem oberen Paßstück (66) angeklemmt ist, bevor das obere Paßstück (66) auf den oberen Abschnitt des zylindrischen Stützgehäuses (14) aufgesetzt wird.

2. Aus Luftfeder und Stoßdämpfer gebildetes Federbein nach Anspruch 1, dadurch gekennzeichnet, daß das längliche zylindrische Stützgehäuse (14) ein Vorratsrohr des Teleskop-Stoßdämpfers bildet, in welchem ein längliches Zylinderrohr (20) angebracht ist, das eine ringförmige Vorratskammer (21) für ein Hydraulic-Fluid in und von dem Zylinderrohr (20) bildet; daß der Kolben (19) gleitbar in dem Zylinderrohr (20) angebracht ist; daß eine Kolbenstangenführung (26) gleitend die Kolbenstange (24) aufnimmt, in dem Zylinderrohr (20) angebracht ist und dessen oberes Ende abschließt, und daß das äußere rohrförmige Teil ein Staubrohr (56) umfaßt, welches dichtend mit dem oberen Endabschnitt der Kolbenstange (24) zur Bewegung mit der Kolbenstange (24) verbunden ist, wobei die rohrförmige Hülse (60) eine Luft-Aufhängungsfeder (12) bildet.

3. Aus Luftfeder und Stoßdämpfer gebildetes Federbein nach Anspruch 1 oder 2, dadurch gekennzeichnet, daß die durch die zylindrische Wand (64) des oberen Paßstückes (66) gehaltene Einrasteinrichtung eine Federrastung (72) ist, die ausgelegt ist, lösbar in eine Vertiefung (74) in dem länglichen zylindrischen Stützgehäuse (14) einzurasten, um eine pneumatisch abgedichtete Befestigung für das obere Ende der rohrförmigen Hülse (60) an dem länglichen zylindrischen Stützgehäuse (14) zu schaffen.

4. Aus Luftfeder und Stoßdämpfer gebildetes Federbein nach Anspruch 3, dadurch gekennzeichnet, daß die Federrastung eine mechanische Einschieb-Formschluß-Rastung (72, 74) mit dem länglichen zylindrischen Stützgehäuse (14) umfaßt, gebildet durch nach innen vorstehende zangenartige Eintiefungen (72), Warzen oder einem Ring an dem oberen Paßstuck (66) zum Zusammenwirken mit einer ringförmigen, in dem zylindrischen Stützgehäuse (14) ausgebildeten Haltenut (74).

5. Aus Luftfeder und Stoßdämpfer gebildetes Federbein nach einem der Ansprüche 1 bis 4, dadurch gekennzeichnet, daß das obere Paßstück (66) aus Metallblech gefertigt ist und eine schüselförmige Ausgestaltung besitzt.

6. Aus Luftfeder und Stoßdämpfer gebildetes Federbein nach einem der Ansprüche 1 bis 5, dadurch gekennzeichnet, daß der obere Abschnitt der rohrförmigen Hülse (60) am Umfang an die zylindrische Wand (64) des oberen Paßstückes (66) mittels eines ringförmigen, den oberen Abschnitt umlaufenden Klemmbandes (68) angeklemmt ist.

7. Aus Luftfeder und Stoßdämpfer gebildetes Federbein nach einem der Ansprüche 1 bis 6, dadurch gekennzeichnet, daß das lösbar einstellbare Klemm-mittel ein lösbar einstellbares Ring-Klemmband (82) umfaßt.

8. Aus Luftfeder und Stoßdämpfer gebildetes Federbein nach Amspruch 7, dadurch gekennzeichnet, daß das Ring-Klemmband (82) eine an einem Ende des Bandes befestigte Schneckenschraube (84) umfaßt, die in eine Reihe von in dem anderen Endabschnitt des Bandes ausgebildeten Schlitzen (86) eingreift.

9. Verfahren zum Warten eines aus Luftfeder und Stoßdämpfer gebildeten Federbeins (10), das einen wirksam in einem äußeren Stützgehäuse (14) angebrachten Hydraulik-Stoßdämpfer besitzt und eine verbrauchte zylindrische Lufthülse (9) aus gummiartigem Material besitzt, deren eines Ende durch erste umgreifende Klemm-Mittel (92) an dem Stützrohr und deren anderes Ende durch zweite umfassende Klemm-Mittel (94) an einem Staubrohr (56) des Federbeins angeschlossen ist, wobei das Staubrohr entfernbar an einem oberen Ende einer hin- und herbewegbaren Kolbenstange (24) des Stoßdämpfers angeschlossen und mit der Lufthülse zusammenwirkend eine Kammer zur Aufnahme von Druckluft bildet eine eine pneumatische Feder (12) zwischen gefederten (38) und ungefederten (18) Fahrzeugbestandteilen schafft, mit folgenden Schritten:

a) Entfernen der verbrauchten rohrförmigen Lufthülse (60, 90) des Federbeins (10) vom äußeren Rohrteil (56) des Federbeins;

b) Entfernen des äußeren Rohrteiles (56) von dem Federbein;

c) Entfernen der verbrauchten rohrförmigen Lufthülse (60, 90) von dem zylindrischen Stützgehäuse (14) des Federbeins;

d) Wieder-Ansetzen des äußeren rohrförmigen Teiles (56) an das Federbein (10);

e) Strecken des unteren Endes der ersetzenden rohrförmigen Lufthülse (60) um das untere Ende des äußeren rohrförmigen Teiles (56) und Anklemmen des unteren Endes der Hülse (60) am Umfang an das äußere rohrförmige Teil (56) durch lösbar einstellbare Klemm-mittel (82) in luftdichter Weise; und

f) Beladen des inneren der ersetzenden rohrförmigem Lufthülse (60) mit Druckluft, gekennzeichnet durch gleitendes Einführen eines zylindrischen oberen Paßstückes (66) einer Vormontageeinheit, die eine ersetzende rohrförmige Lufthülse (60) umfaßt, welche an ihrem Umfang an eine zylindrische Wand (64), des oberen Paßstükkes (66) angeklemmt und dichtend mit ihr verbunden ist, über daz zylindrische Stützgehäuse (14), bis das Paßstück (66) auf den oberen Abschnitt des Stützgehäuses (14) paßt und lösbar in luftdichter Weise an diesem einrastet.

10. Teilesatz für ein aus Luftfeder und Stoßdämpfer gebildetes Federbein nach einem der Ansprüche 1 bis 8, mit einer Vormontageanordnung aus einem oberen Paßstück (66), einer rohrförmigen Hülse (60) aus elastomerem Material mit einem an eine zylindrische Wand (64) des oberen Paßstückes (66) am Umfang angeklemmten und dichtend verbundenen Endabschnitt und lösbar einstellbaren Klemmitteln (82).

**Revendications**

1. Jambe de suspension (10) à ressort pneumatique et amortisseur destinée à être montée entre une partie suspendue (38) et une partie non suspendue (18) d'un véhicule, dans lequel un amortisseur télescopique adapté pour être monté dans une position à peu près verticale dans le véhicule comprend un boîtier support cylindrique (14) de forme allongée qui présente une partie terminale inférieure pouvant être reliée à la partie non suspendue (18) du véhicule, et un piston d'amortissement du mouvement (19) monté pour coulisser dans les deux sens à l'intérieur du boîtier support (14) et muni d'une tige de piston (24) qui émerge du boîtier support (14) et qui possède une partie terminale supérieure pouvant être reliée à la partir suspendue (38) du véhicule, un élément tubulaire extérieur (56) qui est monté sur la tige de piston (24 à sa partie supérieure et qui entoure un partie du boîtier support cylindrique (14), et un manchon tubulaire (60) en élastomère possédant une partie terminale inférieure serrée circonférentiellement sur/et assujettie de manière étanche à l'élément tubulaire extérieur (56) et une partie terminale supérieure serrée circonférentiellement sur/et assujettie de manière étanche à un paroi cylindrique (64) d'un embout supérieur (66) qui s'ajuste exactement sur une partie supérieure du boîtier support cylindrique (14) qu'il entoure, la manchon tubulaire (60) formant alors un lobe roulant (80), caractérisé en ce qu'un dispositif de verrouillage (72) est porté par la paroi cylindrique (64) de l'embout supérieur (66) et se verrouille sur une configuration complémentaire de la partie supérieure du boîtier support (14) pour fixer l'embout supérieur (66) au boîtier support (14) de telle manière que l'embout supérieur (66) puisse se déplacer avec le boîtier support (14); des moyens d'étanchéite (76) sont placés entre la paroi cylindrique (64) de l'embout supérieur (66) et la partie supérieure de la paroi cylindrique du boîtier support (14); le lobe roulant (80) du machon tubulaire (60) s'appuie et roule directement le long de la surface externe du boîtier support cylindrique (14) pendant le fonctionnement de la jambe de suspension; et la partie terminale inférieure du machon tubulaire (60) est serrée circonférentiellement sur la surface externe de l'élément tubulaire extérieur (56) par des moyens de serrage (82) réglables et démontables; l'agencement étant tel que la partie terminale supérieure du manchon tubulaire (60) soit serrée circonférentiellement sur l'embout supérieur (66) avant que l'embout supérieur (66) ne soit positionné sur la partie supérieure du boîtier support cylindrique (14).

2. Jambe de suspension à ressort pneumatique et amortisseur selon la revendication 1, caractérisée en ce que le boîtier support cylindrique (14) de forme allongée constitue un tube réservoir de l'amortisseur téléscopique, à l'intérieur duquel est monté un tube cylindre (20) de forme allongée qui délimite un chambre réservoir annulaire (21) pour un fluide hydraulique qui pénètre et sort du tube cylindre (20); le piston (19) est monté coulissant dans le tube cylindre (20); un guide de tige de piston (26) reçoit à coulissement la tige de piston (24) et est monté dans le tube cylindre (20) et en ferme l'extrémité supérieure; et l'élément tubulaire extérieur comprend un tube pare-poussière (56) qui est fixé de manière étanche à la partie terminale supérieure de la tige de piston (24) pour se déplacer avec elle (24), le manchon tubulaire (60) constituant un ressort de suspension pneumatique (12).

3. Jambe de suspension à ressort pneumatique et amortisseur selon la revendication 1 ou 2, caractérisée en ce que le dispositif de verrouillage porté par la paroi cylindrique (64) de l'embout supérieur (66) est un verrouillage élastique (72) adapté pour se verrouiller de façon séparable dans un évidement (74) ménagé dans le boîtier support cylindrique (14) de forme allongée pour constituer un montage à joint pneumatique étanche pur l'extrémité supérieure du manchon tubulaire (60) sur le boîtier support cylindrique (14) de forme allongée.

4. Jambe de suspension à ressort pneumatique et amortisseur selon la revendication 3, caractérisée en ce que le verrouillage élastique comprend un verrouillage mécanique à emmanchement (72, 74) formé en combinaison avec le boîtier support cylindrique (14) de forme allongée, constitué par des enfoncements (72) en forme de rainures, des crans ou une moulure annulaire, en saillie vers l'intérieur, sur l'embout supérieur (66) pour coopérer avec une gorge de retenue annulaire (74) ménagée dans le boîtier support cylindrique (14).

5. Jambe de suspension à ressort pneumatique et à amortisseur selon l'une quelconque des revendications 1 à 4, caractérisée en ce que l'embout supérieur (66) est fait en tôle et possède une configuration en forme de cloche.

6. Jambe de suspension à ressort pneumatique et amortisseur selon l'un quelonconque des revendications 1 à 5, caractérisée en ce que la partie supérieure du manchon tubulaire (60) est serrée circonférentiellement sur la paroi cylindrique (64) de l'embout supérieur (66) au moyen d'un collier de serrage annulaire (68) qui encercle la partie supérieure.

7. Jambe de suspension à ressort pneumatique et amortisseur selon l'une quelconque des revendications 1 à 6, caractérisée en ce que les moyens de serrage réglables et démontables comprennent un collier de serrage annulaire (82) réglable et amovible.

8. Jambe de suspension à ressort pneumatique et à amortisseur selon la revendication 7, caractérisée en ce que le collier de serrage annulaire (82) comprend une vis sans fin (84) fixée à une extrémité du collier et qui coopère avec une série de fentes (86) ménagées dans l'autre partie d'extrémité du collier.

9. Procédé de réparation d'une jambe de suspension à ressort pneumatique et amortisseur (10) possédant un amortisseur hydraulique monté fonctionnellement dans un boîtier support extérieur (14) et qui comprend un manchon pneumatique cylindrique (90) usé en matière analogue au caoutchouc, dont une extrémité est fixée au boîtier support par des premiers moyens de serrage encerclants (92) et dont l'autre extrémité est fixée à un tube pare-poussière (56) de la jambe de suspension par des seconds moyens de serrage encerclants (94), le tube pare-poussière étant fixé de façon amovible à une extrémité supérieure d'une tige de piston (24) à mouvement alternatif de l'amortisseur et coopérant avec le manchon pneumatique pour délimiter une chambre destinée à recevoir de l'air comprimé et former un ressort pneumatique (12) entre une partie suspendue (38) et un partie non suspendue (18) du véhicule, comprenant les phases consistant à:

a) séparer l'élément tubulaire extérieur (56) de la jambe de suspension le manchon pneumatique tubulaire usé (60, 90) de la jambe de suspension (10);

b) séparer l'élément tubulaire extérieur (56) de la jambe de suspension;

c) séparer le manchon pneumatique tubulaire usé (60, 90) du boîtier support cylindrique (14) de la jambe de suspension;

d) remonter l'élément tubulaire extérieur (56) sur la jambe de suspension (10);

e) emboîter l'extrémité inférieure du manchon pneumatique tubulaire de remplacement (60) sur l'extrémité inférieure de l'élément tubulaire extérieur (56) et serrer circonférentiellement l'extrémité inférieure du manchon (60) sur l'élément tubulaire extérieur (56) à l'aide de moyens de serrage (82) réglables et démontables, en formant un joint étanche à l'air; et

f) garnir l'intérieur du manchon pneumatique tubulaire de remplacement (60) d'air comprimé; caractérisé en ce que on emmanche un embout supérieur cylindrique (66) d'un sous-ensemble comprenant un manchon pneumatique tubulaire de remplacement (60) serré circonférentiellement sur/et assujetti de manière étanche à une paroi cylindrique (64) de l'embout supérieur (66), sur le boîtier support cylindrique (14) jusqu'à ce que l'embout (66) s'ajuste et se verrouille de façon démontable et étanche à l'air sur la partie supérieure du boîtier support (14).

10. Jeu de pièces pour une jambe de suspension à ressort pneumatique et amortisseur selon l'une quelconque des revendications 1 à 8 comprenant un sous-ensemble composé d'un embout supérieur (66); d'un manchon tubulaire (60) en matière élastomère dont une partie terminale est serrée circonférentiellement sur/et assujetti de manière étanche sur une paroi cylindrique (64) de l'embout supérieur (66); et des moyens de serrage réglables et démontables (82).

Fig.1

Fig.2

Fig.3